# FASCICULE DE BREVET EUROPEEN

(11) **EP 2 819 797 B1**
(45) Date de publication et mention de la délivrance du brevet: **14.10.2020**
(21) Numéro de dépôt: 13708710.2
(22) Date de dépôt: 19.02.2013
(51) Int. Cl.: B22F 3/105, B29C 67/00

(54) **PROCEDE POUR REALISER DES OBJETS TRIDIMENSIONNELS A PROPRIETES AMELIOREES**
VERFAHREN ZUR HERSTELLUNG DREIDIMENSIONALER OBJEKTE MIT VERBESSERTEN EIGENSCHAFTEN
METHOD FOR PRODUCING THREE-DIMENSIONAL OBJECTS WITH IMPROVED PROPERTIES

(30) Priorité: 27.02.2012 FR 1251744
(43) Date de publication de la demande: 07.01.2015
(73) Titulaire: Compagnie Générale des Etablissements Michelin, 63000 Clermont-Ferrand (FR)
(72) Inventeur: BESSAC, Christophe, F-63040 Clermont-Ferrand Cedex 9 (FR); BROCHET, Stéphanie, F-63040 Clermont-Ferrand Cedex 9 (FR); PIALOT, Frédéric, F-63040 Clermont-Ferrand Cedex 9 (FR); WALRAND, Gilles, F-63040 Clermont-Ferrand Cedex 9 (FR)
(74) Mandataire: Noel, Luminita
(86) Numéro de dépôt international: PCT/EP2013/053237
(87) Numéro de publication internationale: WO 2013/127655

(56) Documents cités:
- EP-A1- 2 292 357
- WO-A1-01/81031
- DE-A1-102007 056 984
- DE-A1-102009 051 551
- DE-A1-102010 011 059

## Description

La présente invention est relative à un procédé pour réaliser des objets tridimensionnels à propriétés améliorées par consolidation successive, couche par couche, des zones sélectionnées d'une strate de matériau pulvérulent, les zones consolidées correspondant à des sections successives de l'objet tridimensionnel. Un tel procédé de fabrication connu également sous le nom de fabrication additive à base de poudre réalise, couche par couche, de manière partielle ou totale, un frittage ou une fusion des grains de poudre en utilisant un rayonnement électromagnétique (par exemple un faisceau laser) ou un faisceau de particules (par exemple un faisceau d'électrons).

Un exemple de dispositif pour produire un objet tridimensionnel couche par couche à partir d'un matériau pulvérulent par fusion sélective de poudre utilisant un faisceau laser est connu du document US 4863538. Le document WO 0181031 décrit un dispositif pour fabriquer un objet tridimensionnel par un procédé de fabrication additive à base de poudre qui utilise un faisceau d'électrons. Les objets obtenus sont généralement de formes complexes et présentent une assez bonne précision géométrique. Toutefois, selon leur utilisation, ces objets doivent parfois subir des opérations supplémentaires qui ont pour but d'améliorer leur résistance à l'usure, à la fatigue ou aux sollicitations mécaniques subies.

Les objets fabriqués doivent satisfaire aux conditions de fonctionnement ou d'utilisation, notamment en présentant une bonne résistance aux différentes sollicitations mécaniques. Les propriétés mécaniques d'une pièce peuvent varier en fonction de la géométrie de la pièce et du type de sollicitation subie. Ainsi, une pièce doit, par exemple, présenter des caractéristiques mécaniques élevées sur des zones fines, en surface, alors que le cœur de la pièce doit présenter une bonne ductilité. Ces propriétés mécaniques sont obtenues en soumettant la pièce à un traitement thermique.

La tenue mécanique en surface est importante notamment lorsque les objets réalisés doivent présenter une bonne résistance à la fatigue ou à l'usure. En général, les propriétés mécaniques de résistance à la fatigue ou à l'usure des objets fabriqués sont améliorées par des traitements thermiques superficiels. Les traitements thermiques superficiels utilisent le plus souvent des installations de traitement thermique comportant des dispositifs à induction. Toutefois, le traitement effectué avec ces installations peut induire des déformations dans les pièces traitées. Il a été constaté par ailleurs que, pour les objets de formes géométriques complexes, les paramètres souhaités pour le traitement thermique ne pouvaient pas être assurés dans toutes les sections de l'objet en utilisant des méthodes conventionnelles de traitement.

Pour pallier à ces inconvénients, il est également connu de réaliser le traitement superficiel des objets à l'aide des faisceaux à haute densité énergétique, tels les faisceaux laser ou les faisceaux d'électrons. Ces traitements conviennent plus particulièrement aux pièces présentant des géométries complexes, comme la plupart des pièces obtenues par des procédés de fabrication additive à base de poudre.

Le document DE 100 07 962 décrit un tel procédé de fabrication additive à base de poudre qui utilise un faisceau laser pour solidifier les grains de poudre, couche par couche, afin d'obtenir une pièce de moule à injection. La pièce obtenue présente une rugosité importante et, de ce fait, sa surface est ensuite soumise à une opération de finition effectuée à l'aide d'un deuxième faisceau laser qui réalise une fusion superficielle de certaines zones de sa surface pour en réduire la rugosité. L'usage du deuxième faisceau laser est dans ce document limité à une fusion superficielle de la pièce finie.

Le document WO 02/11928 décrit une méthode d'obtention des pièces de précision par un procédé de fabrication additive à base d'un mélange de poudres, utilisant un faisceau laser, la pièce étant ensuite soumise à des traitements thermiques. Les traitements thermiques décrits ont pour but d'homogénéiser la structure, de détendre les tensions internes, d'éliminer les défauts ou d'améliorer l'état de surface. Ces traitements se font en soumettant la pièce obtenue à un frittage supplémentaire puis un refroidissement lent dans un four. Ceci suppose la mise en œuvre des moyens de traitement distincts et distants de ceux de fabrication, ce qui implique l'obtention d'une pièce traitée dans un laps de temps important, compte tenu des temps de traitement assez importants auxquels se rajoutent les temps de transfert des pièces entre le poste de fabrication et celui de traitement.

Le document DE 10 2007 059 865 décrit un autre procédé d'obtention d'une pièce métallique par un procédé de fabrication additive à base de poudre à l'aide d'un faisceau laser. Selon ce document, les propriétés métallo graphiques de la pièce sont modifiées localement dans la pièce ainsi obtenue par un réchauffage de la zone fondue à l'aide d'un élément chauffant à infrarouges ou à l'aide d'un faisceau laser. On obtient ainsi une amélioration de la dureté, de la ténacité ou de la résistance de la pièce. Ce document présente comme principal inconvénient la durée importante d'obtention de la pièce, notamment lorsque le même laser est utilisé d'abord pour solidifier et ensuite pour réaliser le traitement thermique de celle-ci.

On connaît par ailleurs du document US 2011/0165339 un procédé et un dispositif pour fabriquer des objets tridimensionnels qui sont au moins en partie constitués d'un composite de métal cristallin dans une matrice de métal amorphe. Un tel objet est formé en déposant un matériau pulvérulent, couche par couche, dépôt suivi d'une solidification locale de ce matériau par fusion à l'aide d'un faisceau laser ou d'un faisceau d'électrons et d'un refroidissement contrôlé de la zone fusionnée. La puissance de la source et la vitesse de déplacement du faisceau sur une zone de dimensions restreintes de la couche de poudre sont choisies de manière à ce qu'en faisant varier la vitesse de refroidissement de la zone traitée, celle-ci puisse présenter une structure cristalline ou amorphe. Le dispositif décrit dans ce document emploie une seule source d'énergie dont le faisceau émis traite des zones de faibles dimensions, tout en changeant souvent de position, ce qui allonge les temps de fabrication d'une pièce. De ce fait, ce dispositif ne convient pas à la fabrication des pièces de moyennes ou grandes dimensions, ni à une fabrication de série.

Enfin, on connaît le document EP 2 292 357 dans lequel un dispositif de fabrication additive comprend un faisceau laser, un faisceau d'électrons ou une source micro-ondes pour préchauffer une zone de poudre destinée à être fusionnée sélectivement par la suite avec un faisceau laser.

Le but de l'invention est de pallier à ces inconvénients et de proposer un procédé amélioré pour réaliser des objets tridimensionnels par fusion sélective de poudre avec une bonne précision et dont les propriétés mécaniques sont améliorées, tout en étant définies de manière précise pour chaque section de l'objet.

Un autre but de l'invention est de proposer un procédé amélioré permettant d'obtenir des objets tridimensionnels ayant des formes complexes et présentant des propriétés mécaniques améliorées avec une bonne productivité.

Ces buts sont atteints avec un procédé de fabrication d'objet tridimensionnel par consolidation successive, couche par couche, des zones sélectionnées d'une strate de poudre, les zones consolidées correspondant à des sections successives de l'objet tridimensionnel, ledit procédé comportant les étapes suivantes prises dans l'ordre :
a - déposer une couche de poudre sur un support;
b - fusionner ladite couche de poudre au moyen d'une première source d'énergie à faisceau laser de manière à obtenir une couche fusionnée correspondant à la section de l'objet et présentant un premier état de ses propriétés mécaniques,
c - chauffer au moins une partie de la couche fusionnée à l'aide d'une deuxième source d'énergie à faisceau d'électrons à une température qui suit une évolution contrôlée dans le temps de manière à modifier ledit premier état de la couche fusionnée et à obtenir une couche consolidée à propriétés mécaniques améliorées,
d - répéter les étapes précédentes jusqu'à former plusieurs couches consolidées superposées à propriétés améliorées constituant ledit objet.

Le procédé de l'invention permet donc de réaliser un objet tridimensionnel par une technique de fabrication additive à base de poudre en réalisant, couche par couche, la fusion de la poudre avec un faisceau laser issu d'une première source d'énergie qui est une source laser et ensuite un traitement thermique de la couche fusionnée, en tout ou partie de celle-ci, en utilisant un faisceau d'électrons issu d'une deuxième source d'énergie qui est un canon à électrons. On obtient ainsi une couche fusionnée dont la forme géométrique et les dimensions après fusion par laser sont très précises, cette couche étant ensuite traitée thermiquement de manière efficace par un faisceau d'électrons. Le faisceau d'électrons est plus puissant qu'un faisceau laser, il permet un balayage plus rapide et mieux contrôlé de la surface de la couche de poudre que le faisceau laser, et son énergie est mieux absorbée par le matériau de la couche. Ceci permet d'obtenir rapidement et de manière précise une couche consolidée traitée à propriétés mécaniques améliorées.

De par le fait que le traitement thermique s'effectue couche par couche, la structure métallo graphique de chaque couche est ainsi mieux maîtrisée. Ainsi, par le déplacement contrôlé du faisceau d'électrons, d'une intensité prédéterminée, à une vitesse préétablie, sur la surface de la couche fusionnée, la température de celle-ci arrive à suivre une évolution contrôlée en fonction du temps. Le faisceau d'électrons assure ainsi la montée en température, le maintien à une température donnée ou le refroidissement de la zone fusionnée en fonction du traitement thermique choisi. Le refroidissement qui suit le chauffage est conditionné par les paramètres du faisceau d'électrons (vitesse de déplacement, puissance) et par le volume de matériau environnant qui n'est pas affecté par la chaleur et qui permet ainsi d'évacuer les calories. La gestion du chauffage et du refroidissement après fusion est ainsi assurée efficacement par le faisceau d'électrons de manière à ce que l'on puisse obtenir les propriétés mécaniques recherchées pour chaque section (ou couche consolidée) de l'objet, ce qui permet d'éviter une opération supplémentaire plus longue de traitement de l'objet fini.

De surcroît, en appliquant le traitement thermique à chaque couche et en utilisant un faisceau différent de celui qui effectue la fusion, on obtient un gain de temps important, car le traitement peut s'effectuer en temps masqué, par exemple en appliquant le faisceau d'électrons sur des zones déjà fusionnées de la couche et pendant que le faisceau laser fusionne d'autres zones de la même couche.

De préférence, ledit chauffage par faisceau d'électrons réalise un traitement thermique en phase solide de la couche fusionnée qui est choisi parmi les traitements suivants, pris seuls ou en combinaison : recuit de stabilisation, revenu, trempe dans la masse, trempe superficielle.

Le traitement thermique en phase solide consiste à faire subir des transformations de structure dans la couche fusionnée, ou dans une partie de celle-ci, au moyen de cycles préétablis de montée en température, à une température inférieure à celle de fusion, de maintien et de refroidissement contrôlés, afin d'en modifier les caractéristiques mécaniques.

Ainsi, on réalise un recuit de stabilisation en effectuant, à l'aide du faisceau d'électrons, un chauffage uniforme, un maintien sur un palier et un refroidissement lent de la couche fusionnée par laser. Le recuit peut être appliqué sur toute la surface de la couche fusionnée et permet de détendre les contraintes internes apparues après fusion et d'obtenir une couche consolidée traitée sans déformations et dont la géométrie est respectée. Un tel traitement permet également d'obtenir une mise en compression de la peau (ou surface externe qui enveloppe le cœur de l'objet sur une épaisseur donnée, épaisseur qui est comprise entre quelques dixièmes de mm et quelques mm), ce qui a pour résultat d'améliorer la résistance à l'usure et à la fatigue en refermant les fissures et en limitant la propagation des criques de fusion.

Le cycle thermique d'un revenu est composé d'une montée en température, d'un palier de maintien et d'un refroidissement lent. On connaît plusieurs types de revenu:
- le revenu de durcissement qui permet la formation de précipités qui vont durcir le matériau (par exemple dans le cas d'un acier maraging)
- le revenu de détente qui permet de diminuer les contraintes internes après trempe, rétablir les valeurs de résilience, et rendre le matériau traité moins fragile, plus ductile.

Un tel revenu peut être réalisé en appliquant le faisceau d'électrons sur la périphérie de la couche fusionnée par laser, sur une zone localisée de la couche fusionnée ou sur toute la surface de celle-ci. Le faisceau d'électrons permet d'assurer une évolution contrôlée de la température en fonction du temps dans la couche traitée, selon une courbe de revenu spécifique au matériau choisi, de manière à obtenir une modification de la structure métallographique de la couche.

Un traitement de trempe est effectué en modulant l'intensité et la vitesse de déplacement du faisceau d'électrons pour obtenir une montée à haute température suivie d'un refroidissement rapide. Une telle trempe peut être superficielle, réalisée donc au niveau de la peau de l'objet réalisé, ou dans la masse, réalisée donc au cœur de l'objet. Une trempe dans la masse est généralement suivie d'un ou plusieurs revenus, les températures du revenu étant inférieures à celles de la trempe. Une trempe permet d'obtenir un durcissement de la structure.

Avantageusement, la puissance et la vitesse de déplacement du faisceau d'électrons par rapport à l'objet à fabriquer sont choisies en fonction du matériau de celui-ci. Ceci implique de choisir la courbe de température en fonction de la composition du matériau à traiter et de contrôler ensuite l'évolution de la température dans le temps dans chaque couche traitée afin d'obtenir les propriétés mécaniques recherchées pour l'objet.

De préférence, la focalisation du faisceau d'électrons, son déplacement et sa puissance sont contrôlés de manière continue. Ceci permet d'assurer le suivi de l'évolution de la température en fonction du temps dans la couche traitée et donc d'obtenir le traitement thermique souhaité.

Dans un mode avantageux de réalisation de l'invention, les deux faisceaux se déplacent simultanément sur une trajectoire commune, le faisceau laser étant en avance par rapport au faisceau d'électrons, tel que vu dans le sens de déplacement desdits faisceaux par rapport audit objet. Ceci permet d'obtenir une couche consolidée traitée par le faisceau d'électrons au fur et à mesure de la fusion par faisceau laser pour une encore meilleure productivité.

De préférence, le centre de gravité de la zone d'impact du faisceau d'électrons est situé en arrière par rapport au centre de gravité de la zone d'impact du faisceau laser tel que vu dans le sens du déplacement desdits faisceaux par rapport à l'objet. Avantageusement, la distance entre le centre de gravité de la zone d'impact du faisceau d'électrons et le centre de gravité du point d'impact du faisceau laser est déterminée en fonction du matériau et de la granulométrie de la couche de poudre. Ceci permet de mieux gérer la transition de température entre la première zone très chaude due à la fusion par faisceau laser et la deuxième zone chauffée par le faisceau d'électrons en termes de gradient de température et également dans l'espace concerné (surface et épaisseur relatives).

De préférence, la puissance et le diamètre du faisceau laser et du faisceau d'électrons sont réglables afin de mieux pouvoir les adapter aux conditions de précision géométrique et aux propriétés mécaniques souhaitées pour l'objet.

De préférence, ladite poudre est une poudre métallique. Après des tests effectués en laboratoire, il a été constaté que le procédé de l'invention se prêtait très bien à la fabrication des pièces métalliques ayant une bonne précision et de bonnes propriétés mécaniques.

Avantageusement, ledit objet tridimensionnel est un moule ou une partie de moule pour la fabrication d'un pneumatique. Le procédé de l'invention permet de réaliser des pièces de forme complexe et convient plus particulièrement à la fabrication d'un moule ou d'une partie de moule pour pneumatique, telle une garniture de moule ayant des éléments de petites dimensions, tels que des lamelles ou des cordons.

L'invention sera mieux comprise grâce à la suite de la description, qui s'appuie sur les figures suivantes :
- la figure 1 est une vue en coupe montrant schématiquement un appareil pour fabriquer un objet tridimensionnel selon l'invention ;
- les figures 2a et 2b illustrent des vues de dessus de l'objet montrant schématiquement les zones d'impact des deux faisceaux énergétiques utilisés avec l'appareil de l'invention ;
- la figure 3 illustre un diagramme TRC utilisée avec un premier exemple de réalisation de l'invention ;
- la figure 4 est une courbe illustrant l'évolution de la température en fonction du temps dans le cadre d'un traitement thermique selon un premier exemple de réalisation de l'invention ;
- la figure 5 est une courbe illustrant l'évolution de la température en fonction du temps dans le cadre d'un traitement thermique selon un deuxième exemple de réalisation de l'invention.

Sur les différentes figures, les éléments identiques ou similaires portent la même référence. Leur description n'est donc pas systématiquement reprise. Il faut noter par ailleurs que les épaisseurs des couches, les dimensions des faisceaux de rayonnement ou celles de l'objet réalisé ne sont pas représentés à une échelle cohérente mais au contraire volontairement faussée dans le but de rendre les figures lisibles.

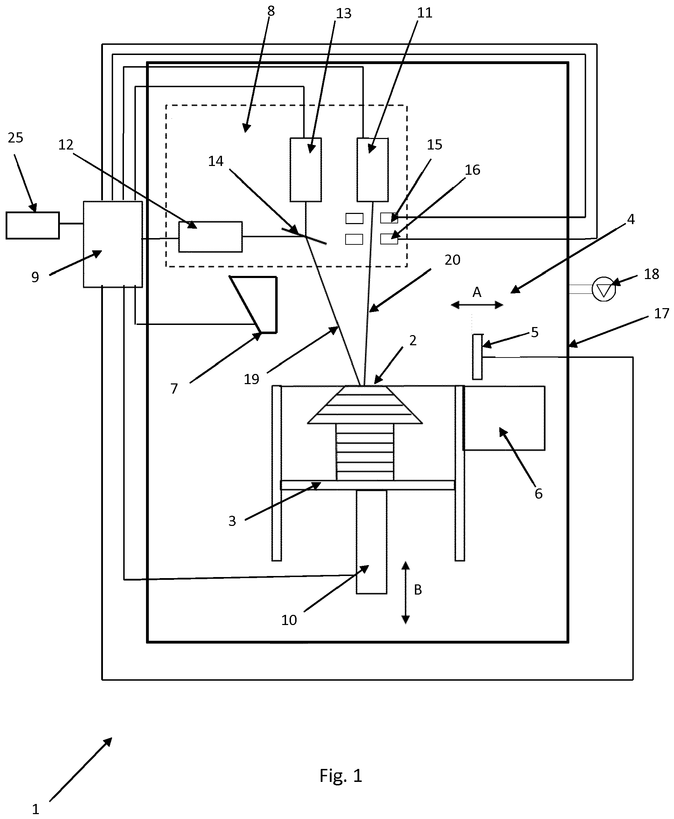

La figure 1 illustre un appareil 1 pour fabriquer un objet tridimensionnel 2. L'appareil comprend un plateau horizontal 3 sur lequel est construit l'objet 2 pour lequel il forme un support. L'appareil comprend également des moyens de distribution de poudre 4, en provenance d'un réservoir de poudre 7 situé au-dessus du plateau 3, lesdits moyens de distribution étant aptes à appliquer une fine couche de poudre sur le plateau 3, par exemple à l'aide de la raclette 5. La raclette 5 est mise en mouvement par des moyens d'actionnement (non représentés) pour effectuer un mouvement de translation alternative, dans un plan horizontal, selon la double flèche A, au-dessus du plateau 3. Ainsi, la raclette 5 étale la poudre en une couche fine, à partir de la sortie du réservoir 7, le surplus de poudre étant poussé par la raclette 5 dans un bac de récupération 6. La raclette 5 est de préférence ramenée dans sa position initiale à proximité de la sortie du réservoir 7 avant le commencement d'un nouveau cycle de mise en couche de la poudre. Dans une variante, un dispositif de compactage (non représenté sur les dessins) de la couche de poudre étalée peut également être prévu. La couche de poudre ainsi étalée sur le plateau 3 forme ainsi une strate qui est fusionnée sélectivement à l'aide d'un ou plusieurs faisceaux énergétiques en provenance d'un ensemble de sources d'énergie 8. L'objet tridimensionnel 2 est réalisé par une fusion sélective ou un frittage sélectif de poudre et est construit par superposition des couches sur la base d'une modélisation de l'objet par un ordinateur. Le faisceau énergétique (ou les faisceaux énergétiques) est (sont) piloté(s) par un microprocesseur d'une unité de contrôle 9 comprenant la modélisation de l'objet pour fabriquer l'objet par fusion ou frittage successif de couches de poudre superposées. Lors d'un cycle de fabrication de l'objet, le plateau 3 est abaissé régulièrement, après consolidation de chaque couche de poudre, d'une distance égale à l'épaisseur de la couche de poudre consolidée. Pour ceci, le plateau 3 est relié à un mécanisme d'entraînement en un mouvement de translation verticale, selon la double flèche B, par exemple en reliant la tige verticale 10 de support du plateau 3 à un mécanisme de type pignon-crémaillère ou vis-écrou actionné par un servomoteur ou par un moteur pas à pas. Il est bien entendu possible, dans une variante de l'invention d'alimenter en poudre le plateau par le bas.

Plus particulièrement, l'appareil 1 comprend deux sources différentes d'énergie: un canon à faisceau d'électrons 11 et une source laser 12.

La source laser 12 est par exemple un laser à CO₂ ou un laser Nd :Yag qui a une puissance égale ou supérieure à 500 W. La source laser 1 est déplacée par des premiers moyens de déplacement pour fusionner une couche de poudre en fonction de des données de modélisation de l'objet et d'une stratégie de fusion prédéfinie pour fabriquer l'objet. Pour ceci, la source laser 1 est reliée à une unité de pilotage 13 d'un miroir galvanométrique 14 qui permet d'orienter et de déplacer le faisceau laser issu de la source 12 par rapport à l'objet 2 en fonction des informations envoyées par l'unité de contrôle 9. Le faisceau laser peut être déplacé par l'unité de contrôle 9 à une vitesse d'environ 10m/s.

Le canon à électrons 11 comprend, de manière connue, un circuit de haute tension qui produit la tension d'accélération des électrons émis par l'électrode émettrice du canon qui est, elle, reliée à une source de courant permettant son chauffage pour produire l'émission d'électrons. Le faisceau d'électrons issu du canon est orienté par des bobines déflectrices 16 par rapport à l'objet 2 en fonction des informations envoyées par l'unité de contrôle 9. L'appareil 1 comprend également des bobines de focalisation 15 du faisceau permettant de réaliser une focalisation du faisceau d'électrons par rapport à la zone travaillée de l'objet 2. La puissance du canon d'électrons est d'environ 3000W et son faisceau peut être déplacé à une vitesse d'environ 1000m/s.

Les composants de l'appareil 1 sont agencés à l'intérieur d'une enceinte étanche 17 reliée à une pompe à vide 18 qui maintient un vide d'environ 10⁻⁴-10⁻⁶ mbar à l'intérieur de l'enceinte. Un tel niveau de pression assure un bon fonctionnement du canon à électrons et permet d'éviter les phénomènes d'oxydation lorsque la fusion sélective de la poudre est effectuée par la source laser. La pompe à vide 18 est choisie de manière à ce que son débit soit suffisant pour prendre en compte le dégazage résultant du cycle thermique ainsi qu'un éventuel débit de fuite de l'enceinte 17.

Les parois de l'enceinte 17 sont de préférence en acier et sont suffisamment épaisses, l'épaisseur des parois pouvant être d'environ 20 à 30 mm, pour assurer la protection de l'opérateur contre les rayons X. L'enceinte 17 comporte par ailleurs des hublots (non représentés) permettant à l'opérateur de visualiser les différentes zones à l'intérieur de l'appareil, tout en assurant la protection contre les rayons X émis par le canon à électrons et contre les rayons lumineux émis par la source laser.

L'unité de contrôle 9 commande l'alimentation et le pilotage des sources d'énergie, l'alimentation en poudre depuis le réservoir et la distribution par les moyens de distribution d'une couche de poudre, ainsi que le mouvement du plateau. Dans une variante de l'invention, l'appareil comprend de plus des moyens de mesure de la température, tels une caméra IR ou CCD qui sont aptes à communiquer à l'unité de contrôle des informations concernant la température de la couche de poudre et permettent d'ajuster ainsi les paramètres de fonctionnement du canon d'électrons ou du faisceau laser.

Selon l'invention, on utilise le faisceau d'électrons 20 en provenance du canon 11 pour réaliser le traitement thermique de la strate de poudre fusionnée avec le faisceau laser 19 en provenance de la source 12. Le canon à électrons 11 est ainsi déplacé par des deuxièmes moyens de déplacement pour chauffer une couche de poudre fusionnée en fonction de données de modélisation de l'objet et des courbes d'évolution de la température avec le temps prédéfinies pour chaque couche. Plus particulièrement, le traitement thermique s'effectue en dirigeant le faisceau d'électrons 20 de puissance prédéterminée et à une vitesse préétablie sur des zones fusionnées de la strate de poudre de manière à gérer localement l'évolution de la température en fonction du temps et à obtenir les propriétés mécaniques souhaitées pour la section correspondante de l'objet fini. La puissance du faisceau d'électrons 20 et le temps d'interaction avec la zone fusionnée sont choisis de manière à obtenir la vitesse nécessaire de montée en température, de maintien ou de refroidissement selon la courbe d'évolution de la température en fonction du temps caractéristique au traitement et au matériau choisis. Le refroidissement se fait par conduction thermique de la couche consolidée avec la surface du plateau 3, qui est en un matériau conducteur, ou avec les couches précédemment consolidées construites sur le plateau 3. Dans une variante (non représentée aux figures), un circuit de refroidissement peut être aménagé au sein de l'appareil de manière à ce que ses conduits soient amenés en contact avec le plateau 3 et/ou avec l'objet 2.

L'appareil 1 comprend également une unité de mémoire 25 dans laquelle sont stockées des données relatives à l'évolution température/temps lors de l'obtention de chaque couche consolidée de l'objet. Cette mémoire 25 est reliée à l'unité de contrôle 9 qui commande la focalisation du faisceau d'électrons 20, son déplacement et sa puissance, de manière continue, pour obtenir les courbes d'évolution de la température en fonction du temps dans chaque couche traitée. Dans une variante de l'invention, une régulation plus fine du pilotage des faisceaux peut être réalisée à partir d'un suivi de la température de la surface de la couche.

Dans une première variante de réalisation de l'invention (non représentée aux dessins), le faisceau laser 19 réalise la fusion des zones discrètes de la strate de poudre, les zones étant situées à distance l'une par rapport à l'autre, et ceci selon une stratégie de fusion préétablie. Le faisceau d'électrons 20 est ensuite dirigé sur les zones fusionnées, et ceci au fur et à mesure de la fusion par faisceau laser.

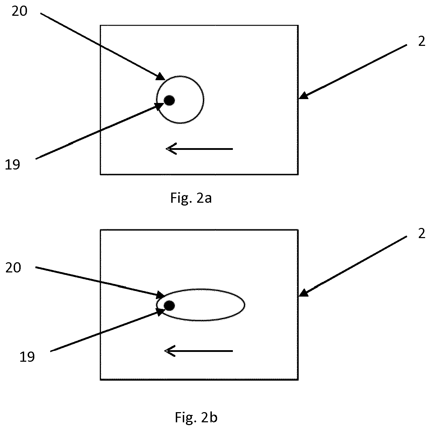

Dans une deuxième variante de réalisation de l'invention et tel que visible aux figures 2a et 2b, le faisceau laser 19 et le faisceau d'électrons 20 sont déplacés ensemble par leurs moyens de déplacement respectifs, selon une trajectoire commune préétablie. La focalisation des deux faisceaux est telle que l'aire de la zone d'impact du faisceau d'électrons 20 soit plus grande que celle du faisceau laser 19. Ceci permet d'obtenir une fusion de précision, avec un faisceau laser très focalisé et, en même temps, une bonne gestion de la température de la zone fusionnée et autour de celle-ci avec un faisceau d'électrons plus large. Le positionnement des faisceaux, l'un par rapport à l'autre, est tel que le centre de gravité de la zone d'impact du faisceau d'électrons 20 soit situé en arrière par rapport au centre de gravité du point d'impact du faisceau laser 19, selon le sens de déplacement des faisceaux par rapport à l'objet 2, tel qu'indiqué par les flèches. Ainsi, en réglant l'intensité de chaque faisceau de manière à pouvoir obtenir la fusion par faisceau laser et à gérer le chauffage ou le refroidissement de la zone fusionnée par faisceau d'électrons, on arrive à obtenir les propriétés souhaitées dans la couche de manière continue, au fur et à mesure de la consolidation de celle-ci. Ceci permet de garantir une bonne gestion de la température de la couche fusionnée, de manière localisée, juste après la fusion par laser, et d'assurer un bon contrôle des propriétés de la couche fusionnée, ainsi que de réduire le temps de réalisation de l'objet.

La zone d'impact du faisceau d'électrons 20 peut être de forme circulaire (fig. 2a), en réglant le point de focalisation à une distance prédéterminée au-dessus de la surface de la couche de poudre. Pour des objets qui nécessitent plus de précision de leur forme et de leur surface, s'étendant de part et d'autre du point d'impact du faisceau d'électrons 20, la zone d'impact peut avoir une forme oblongue (fig. 2b), qui peut être obtenue en réglant le faisceau d'électrons, par exemple par pilotage des bobines 15 à l'origine des champs magnétiques de focalisation.

Les poudres utilisées avec le procédé de l'invention sont des poudres métalliques, telles les poudres de Ti, Ni-Ti, de superalliages, d'alliages d'aluminium, d'invar, d'aciers inoxydables, de CoCr, de maraging et d'autres poudres métalliques, ou des poudres céramiques. Selon la géométrie et les caractéristiques mécaniques ou de surface de l'objet à réaliser, ainsi que selon l'épaisseur de la couche finale visée, le diamètre moyen des particules de la poudre peut varier de quelques microns, par exemple 5µm, à 300µm. Selon les paramètres de fonctionnement des faisceaux énergétiques utilisés et selon les poudres utilisées, l'épaisseur d'une couche de poudre peut varier de quelques micromètres, par exemple 10µm, à plusieurs centaines de micromètres, par exemple 500µm.

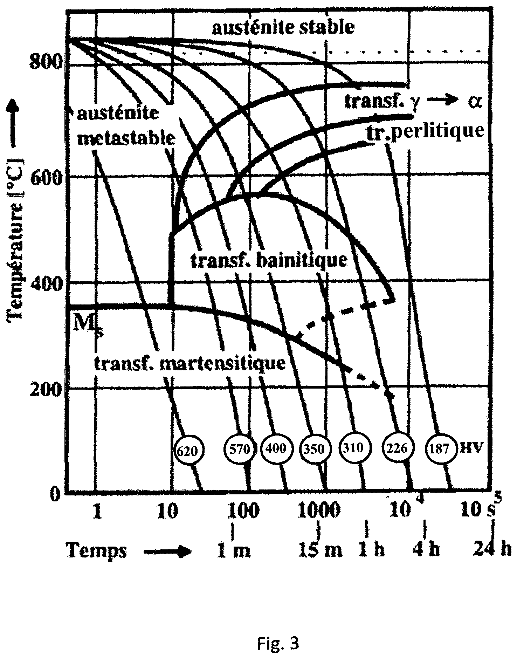

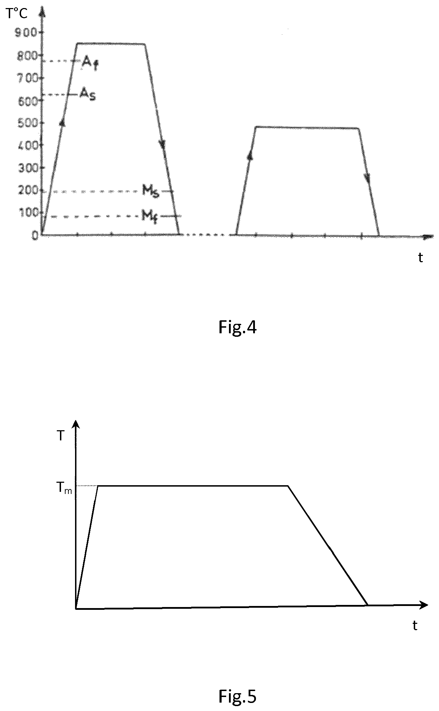

La figure 4 illustre un premier exemple de traitement thermique réalisé avec l'appareil et selon le procédé de l'invention. Une couche de poudre d'acier maraging Fe-Ni à 18% Ni est déposée sur le plateau 3. La couche déposée est ensuite fusionnée avec le faisceau laser 19. La puissance et la vitesse de déplacement du faisceau d'électrons 20 sont réglées de manière à ce que son déplacement sur la zone fusionnée de la couche puisse assurer l'évolution de la température en fonction du temps selon les courbes visibles à la figure 4. Ainsi, la courbe située en la partie gauche de la figure 4 est une trempe obtenue par chauffage de la zone fusionnée jusqu'à la température d'austénitisation, chauffage suivi d'un maintien sur un palier de température et ensuite d'un refroidissement contrôlé de manière à obtenir une structure martensitique. La figure 3 illustre un diagramme TRC ou diagramme de Transformation en Refroidissement Continu que l'on utilise dans le cas des trempes de l'acier maraging de l'exemple pour estimer la vitesse optimale de refroidissement afin d'obtenir la microstructure souhaitée. La courbe Ms sur ce diagramme détermine le point de début de la transformation martensitique pour une vitesse de refroidissement choisie. Sur la courbe de la partie gauche de la figure 4, As et Af représentent les points de début, respectivement de fin de la transformation austénitique et Ms et Mf les points de début, respectivement de fin de la transformation martensitique subie par la couche traitée. Lors du traitement effectué, le faisceau d'électrons chauffe la zone fusionnée de la couche jusqu'à une température voisine mais supérieure à Af, réalise un maintien de cette température pendant un temps prédéterminé, puis effectue le refroidissement à une vitesse prédéterminée (choisie à l'aide du diagramme de la figure 3) afin d'obtenir une microstructure martensitique. La trempe martensitique a pour but d'améliorer les propriétés tribologiques et mécaniques du matériau traité, notamment sa résistance à l'usure, à la flexion ou à la torsion.

La partie droite de la figure 4 est un traitement de revenu qui est réalisé après la trempe. Pour ceci, on règle la puissance et la vitesse du faisceau d'électrons 20 de manière à ce que l'évolution de la température en fonction du temps dans la zone de la couche trempée suive la courbe illustrée à la figure 4. Dans l'exemple de l'acier maraging utilisé, le revenu est couramment utilisé après la trempe afin de former des précipités et d'augmenter l'élasticité et la charge à la rupture.

Le traitement thermique réalisé selon la courbe de la partie droite de la figure 4 peut également être appliqué à une couche fusionnée par faisceau laser, sans avoir effectué de trempe préalablement. Ce traitement aide à détendre les tensions dans la couche fusionnée.

Une fois le traitement réalisé sur la première couche fusionnée, une nouvelle couche de poudre est déposée sur la précédente et le traitement thermique est appliqué à la nouvelle couche fusionnée et qui a adhéré la couche précédente. Ceci est répété couche par couche jusqu'à l'obtention de l'objet tridimensionnel 2.

La figure 5 illustre un deuxième exemple de traitement thermique réalisé avec l'appareil et selon le procédé de l'invention. Une couche de poudre d'alliage à base de Co allié Cr est déposée sur le plateau 3. La couche déposée est ensuite fusionnée avec le faisceau laser 19. La puissance et la vitesse de déplacement du faisceau d'électrons 20 sont réglées de manière à ce que son déplacement sur la zone fusionnée de la couche puisse assurer l'évolution de la température en fonction du temps selon la courbe visible à la figure 5. Il s'agit d'un chauffage jusqu'à une température Tₘ qui est d'environ 800°C dans cet exemple, d'un maintien pendant une durée prédéterminée, suivi d'un refroidissement. Le chauffage se fait plus rapidement que le refroidissement, la vitesse de chauffage étant environ deux fois supérieure à celle de refroidissement. Le traitement thermique réalisé est un recuit de stabilisation qui permet de détendre les tensions dans la couche fusionnée par le faisceau laser et obtenir une couche consolidée à propriétés mécaniques améliorées.

D'autres variantes et modes de réalisation de l'invention peuvent être envisagés sans sortir du cadre de ses revendications. Ainsi, on peut utiliser plusieurs sources à faisceau d'électrons pour réaliser le préchauffage et/ou plusieurs sources à faisceau laser pour réaliser la fusion d'une couche de poudre.

## Revendications

1. Procédé de fabrication d'objet tridimensionnel (2) par consolidation successive, couche par couche, des zones sélectionnées d'une strate de poudre, les zones consolidées correspondant à des sections successives de l'objet tridimensionnel, ledit procédé comportant les étapes suivantes prises dans l'ordre :
a - déposer une couche de poudre sur un support (3);
b - fusionner ladite couche de poudre au moyen d'une première source d'énergie à faisceau laser (19) de manière à obtenir une couche fusionnée correspondant à la section de l'objet (2) et présentant un premier état de ses propriétés mécaniques,
c - chauffer au moins une partie de la couche fusionnée à l'aide d'une deuxième source d'énergie à faisceau d'électrons (20) à une température qui suit une évolution contrôlée dans le temps de manière à modifier ledit premier état de la couche fusionnée et à obtenir une couche consolidée à propriétés mécaniques améliorées,
d - répéter les étapes précédentes jusqu'à former plusieurs couches consolidées superposées à propriétés améliorées constituant ledit objet (2).

2. Procédé selon la revendication 1, **caractérisé en ce que** ledit chauffage par faisceau d'électrons (20) réalise un traitement thermique en phase solide de la couche fusionnée qui est choisi parmi les traitements suivants, pris seuls ou en combinaison : recuit de stabilisation, revenu, trempe.

3. Procédé selon l'une des revendications précédentes, **caractérisé en ce que** la puissance et la vitesse de déplacement du faisceau d'électrons (20) par rapport à l'objet (2) à fabriquer sont choisies en fonction du matériau de celui-ci.

4. Procédé selon l'une des revendications précédentes, **caractérisé en ce que** la focalisation du faisceau d'électrons (20), son déplacement et sa puissance sont contrôlés de manière continue.

5. Procédé selon l'une des revendications précédentes, **caractérisé en ce que** les deux faisceaux se déplacent simultanément sur une trajectoire commune, le faisceau laser (19) étant en avance par rapport au faisceau d'électrons (20), tel que vu dans le sens de déplacement desdits faisceaux par rapport à l'objet à fabriquer (2).

6. Procédé selon la revendication 5, **caractérisé en ce que** le centre de gravité de la zone d'impact du faisceau d'électrons (20) est situé en arrière par rapport au centre de gravité de la zone d'impact du faisceau laser (19) tel que vu dans le sens du déplacement desdits faisceaux par rapport à l'objet.

7. Procédé selon la revendication 6, **caractérisé en ce que** la distance entre le centre de gravité de la zone d'impact du faisceau d'électrons (20) et le centre de gravité du point d'impact du faisceau laser (19) est déterminée en fonction du matériau et de la granulométrie de la couche de poudre.

8. Procédé selon l'une des revendications précédentes, **caractérisé en ce que** la puissance et le diamètre du faisceau laser (19) et du faisceau d'électrons (20) sont réglables.

9. Procédé selon l'une des revendications précédentes, **caractérisé en ce que** ladite poudre est une poudre métallique.

10. Procédé selon l'une des revendications précédentes, **caractérisé en ce que** ledit objet tridimensionnel (2) est un moule ou une partie de moule pour la fabrication d'un pneumatique.

## Patentansprüche

1. Verfahren zur Herstellung eines dreidimensionalen Objekts (2) durch aufeinander folgendes Verfestigen, Schicht für Schicht, der ausgewählten Bereiche einer Pulverlage, wobei die verfestigten Bereiche ausgewählten Abschnitten des dreidimensionalen Objekts entsprechen, wobei das Verfahren die folgenden Schritte umfasst, in der angegebenen Reihenfolge:
a - Aufbringen einer Pulverschicht auf einen Träger (3);
b - Verschmelzen der Pulverschicht mittels einer ersten Laserstrahl-Energiequelle (19), um so eine verschmolzene Schicht zu erhalten, die dem Abschnitt des Objekts (2) entspricht und einen ersten Zustand ihrer mechanischen Eigenschaften aufweist,
c - Erwärmen wenigstens eines Teils der verschmolzenen Schicht mithilfe einer zweiten Elektronenstrahl-Energiequelle (20) auf eine Temperatur, welche eine zeitlich gesteuerte Änderung erfährt, um so den ersten Zustand der verschmolzenen Schicht zu modifizieren und eine verfestigte Schicht mit verbesserten mechanischen Eigenschaften zu erhalten,
d - Wiederholen der vorhergehenden Schritte, bis mehrere übereinanderliegende verfestigte Schichten mit verbesserten Eigenschaften ausgebildet worden sind, die das Objekt (2) bilden.

2. Verfahren nach Anspruch 1, **dadurch gekennzeichnet, dass** das Erwärmen mittels Elektronenstrahl (20) eine Wärmebehandlung der verschmolzenen Schicht in fester Phase bewirkt, welche aus den folgenden Behandlungen ausgewählt ist, einzeln oder kombiniert: Stabilisierungsglühen, Anlassen, Härten.

3. Verfahren nach einem der vorhergehenden Ansprüche, **dadurch gekennzeichnet, dass** die Leistung und die Bewegungsgeschwindigkeit des Elektronenstrahls (20) in Bezug auf das herzustellende Objekt (2) in Abhängigkeit vom Material desselben gewählt werden.

4. Verfahren nach einem der vorhergehenden Ansprüche, **dadurch gekennzeichnet, dass** die Fokussierung des Elektronenstrahls (20), seine Bewegung und seine Leistung kontinuierlich gesteuert werden.

5. Verfahren nach einem der vorhergehenden Ansprüche, **dadurch gekennzeichnet, dass** sich die zwei Strahlen gleichzeitig auf einer gemeinsamen Trajektorie bewegen, wobei, in der Bewegungsrichtung der Strahlen in Bezug auf das herzustellende Objekt (2) gesehen, der Laserstrahl (19) in Bezug auf den Elektronenstrahl (20) vorausgeht.

6. Verfahren nach Anspruch 5, **dadurch gekennzeichnet, dass** sich der Schwerpunkt des Auftreffbereichs des Elektronenstrahls (20), in der Richtung der Bewegung der Strahlen in Bezug auf das Objekt gesehen, bezüglich des Schwerpunktes des Auftreffbereichs des Laserstrahls (19) hinten befindet.

7. Verfahren nach Anspruch 6, **dadurch gekennzeichnet, dass** der Abstand zwischen dem Schwerpunkt des Auftreffbereichs des Elektronenstrahls (20) und dem Schwerpunkt des Auftreffbereichs des Laserstrahls (19) in Abhängigkeit vom Material und von der Korngröße der Pulverschicht bestimmt wird.

8. Verfahren nach einem der vorhergehenden Ansprüche, **dadurch gekennzeichnet, dass** die Leistung und der Durchmesser des Laserstrahls (19) und des Elektronenstrahls (20) verstellbar sind.

9. Verfahren nach einem der vorhergehenden Ansprüche, **dadurch gekennzeichnet, dass** das Pulver ein Metallpulver ist.

10. Verfahren nach einem der vorhergehenden Ansprüche, **dadurch gekennzeichnet, dass** das dreidimensionale Objekt (2) eine Form oder ein Formteil zur Herstellung eines Reifens ist.

## Claims

1. Method for fabricating a three-dimensional object (2) by successive consolidation, layer by layer, of the selected regions of a layer of powder, the consolidated regions corresponding to successive sections of the three-dimensional object, the said method comprising the following steps taken in order:
a - deposit a layer of powder onto a support;
b - fuse the said layer of powder by means of a first laser energy source (19) in such a manner as to obtain a fused layer corresponding to the section of the object and exhibiting a first state of its mechanical properties,
c - heat at least a part of the fused layer by means of a second electron beam energy source (20) to a temperature which follows a controlled variation over time in such a manner as to modify the said first state of the fused layer and to obtain a consolidated layer with improved mechanical properties,
d - repeat the preceding steps until several superposed consolidated layers are formed with improved properties forming the said object (2).

2. Method according to Claim 1, **characterized in that** the said heating by electron beam performs a heat treatment in the solid phase of the fused layer which is chosen from amongst the following treatments, taken alone or in combination: stabilization annealing, tempering, quenching.

3. Method according to one of the preceding claims, **characterized in that** the power and the speed of travel of the electron beam (20) with respect to the object to be fabricated are chosen according to the material of the latter.

4. Method according to one of the preceding claims, **characterized in that** the focussing of the electron beam (20), its displacement and its power are continuously controlled.

5. Method according to one of the preceding claims, **characterized in that** the two beams move simultaneously over a common path, the laser beam (19) being in advance with respect to the electron beam (20), as seen in the direction of displacement of the said beams with respect to the object to be fabricated (2).

6. Method according to Claim 5, **characterized in that** the centre of gravity of the impact area of the electron beam (20) is situated behind with respect to the centre of gravity of the impact area of the laser beam (19), as seen in the direction of the displacement of the said beams with respect to the object.

7. Method according to Claim 6, **characterized in that** the distance between the centre of gravity of the impact area of the electron beam (20) and the centre of gravity of the point of impact of the laser beam (19) is determined as a function of the material and of the granulometry of the layer of powder.

8. Method according to one of the preceding claims, **characterized in that** the power and the diameter of the laser beam (19) and of the electron beam (20) are adjustable.

9. Method according to one of the preceding claims, **characterized in that** the said powder is a metal powder.

10. Method according to one of the preceding claims, **characterized in that** the said three-dimensional object (2) is a mould or a part of a mould for the fabrication of a tyre.
